# EUROPÄISCHE PATENTANMELDUNG

(11) **EP 1 742 342 A1**
(43) Veröffentlichungstag der Anmeldung: **10.01.2007**
(21) Anmeldenummer: 05405429.1
(22) Anmeldetag: 08.07.2005
(51) Int. Cl.: H02M 7/48

(54) **Spannungsbestimmung**

(71) Anmelder: ABB Schweiz AG, 5400 Baden (CH)
(72) Erfinder: Herold, Simon, 8910 Affoltern am Albis (CH); Steinke, Jürgen, 79774 Albbruck (DE)
(74) Vertreter: ABB Patent Attorneys

(57) **Zusammenfassung**

Die Spannungen der fliegenden Kondensatoren (U₁₄) eines Multicell Converters, eines Stacked Multicell Converters oder eines Active Neutral-Point Clamped Multi-level Converters werden aus den gemessenen Phasenspannungen (U₅), den gemessenen Phasenströmen (U₅), den gemessenen Zwischenkreisspannungen (U₃) und den jeweiligen Schaltzuständen (19) der Halbleiterschalter berechnet.
In einem ersten Schritt werden für alle fliegenden Kondensatoren des mehrzelligen Gleichspannungswechselrichters die Kondensatorströme berechnet. Aus diesen Strömen werden dann in einem zweiten Schritt durch Integration die zu bestimmenden Kondensatorspannungen errechnet. Dabei ist vor der Integration ein Korrekturwert (28) zu berücksichtigen, welcher wiederum aus den gemessenen Werten berechnet wird.
Dadurch sind keine direkten Messungen der einzelnen Kondensatorspannungen mehr nötig.

## Beschreibung

### Technisches Gebiet

Die Erfindung bezieht sich auf das Gebiet der Leistungselektronik. Sie betrifft ein Verfahren zum Bestimmen der Spannungen der fliegenden Kondensatoren eines mehrzelligen Gleichspannungswechselrichters.

### Stand der Technik

Zur Umformung elektrischer Energie sind statische Frequenzumrichter weit verbreitet. Beim Gleichspannungswechselrichter, welcher zu den statischen Frequenzumrichtern gehört, wird mindestens eine innere, durch einen Kondensator gebildete Gleichspannungsquelle mit Hilfe von Halbleiterschaltern mit positivem oder negativem Vorzeichen an die Ausgangsklemmen geschaltet und so eine Wechselspannung erzeugt. Im Gegensatz zu einem elektrischen Wechselspannungsnetz, in welchem die Spannungen einen sinusförmigen Zeitverlauf aufweisen und somit im Verlauf einer Periode jede Spannung alle kontinuierlichen Werte zwischen einem Maximum und einem Minimum annehmen werden, sind die von einem Gleichspannungswechselrichter erzeugten Wechselspannungen diskret, so dass die Wechselspannung stufenförmig verlaufen und innerhalb einer Periode nur eine bestimmte Anzahl an Werten annehmen wird.

Die vom Gleichspannungswechselrichter erzeugte Wechselspannung kann qualitativ verbessert werden, indem die Anzahl der diskreten Werte, welche sie während einer Periode annehmen kann, erhöht. Dies geschieht durch Erhöhen der Anzahl der inneren Gleichspannungsquellen, welche durch Kondensatoren, auch fliegende Kondensatoren genannt, gebildet werden, sowie der Anzahl der Halbleiterschalter, mit welchen die einzelnen Gleichspannungsquellen mit positivem oder negativem Vorzeichen an die Ausgangsklemmen geschaltet werden können. Die erzeugte Wechselspannung wird somit durch die Summe einer wechselnden Untermenge aller Kondensatorspannungen gebildet, wobei jede einzelne Kondensatorspannung mit positivem oder negativem Vorzeichen oder gar nicht an der Summe beteiligt ist.

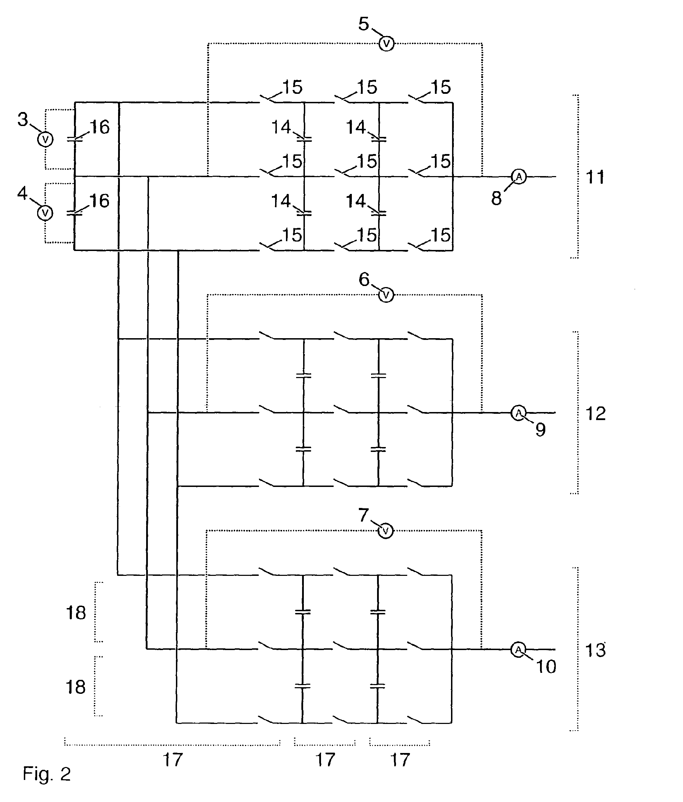

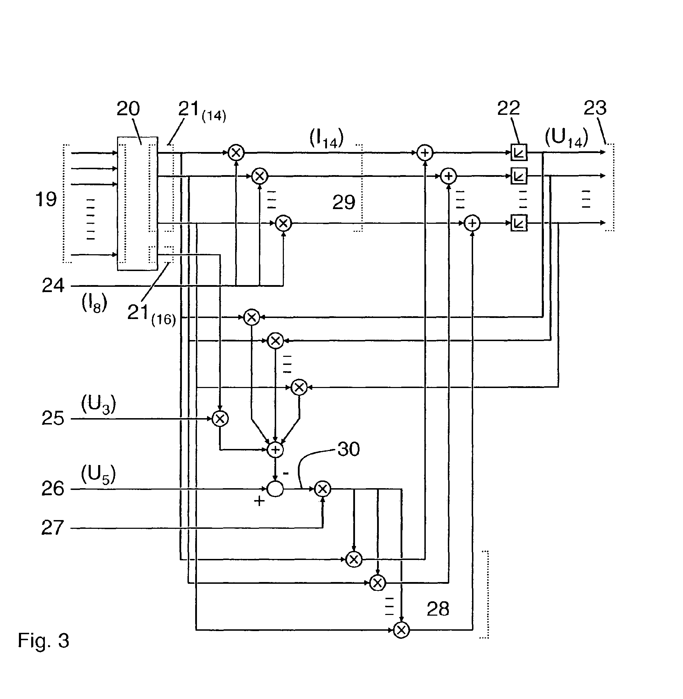

Bekannte Ausführungsvarianten von Gleichspannungswechselrichtern mit erhöhter Anzahl von inneren Gleichspannungsquellen sind die sogenannten *Multicell Converter* (MC) und die *Stacked Multicell Converter* (SMC). Der MC umfasst pro Phase mehrere Zellen mit einem Kondensator und dazugehörigen Halbleiterschaltern, wobei jeweils eine Zelle jeder Phase den Zwischenkreiskondensator und die genannten Halbleiterschalter umfasst. Beim SMC sind pro Phase mehrere Stapel mit der jeweiligen Struktur eines MC vorhanden. Der Aufbau eines MC und eines SMC kann den Figuren 2 und 3 entnommen werden.

Beim MC und SMC werden die Gleichspannungsquellen fliegende Kondensatoren genannt.. Fliegend heisst beim MC und SMC, dass das Potential auf welchem sich die Kondensatoren befinden (nicht die Spannung über den Kondensatoren, sondern die Spannung eines Pols der Kondensatoren zum Zwischenkreiskondensator) während dem Betrieb springt. Es sind aber auch Topologien mit erhöhter Anzahl innerer Gleichspannungsquellen denkbar bei welchen keine fliegenden Kondensatoren zum Einsatz kommen

Für die Qualität der erzeugten Wechselspannung ist es wichtig, dass die einzelnen Kondensatorspannungen nicht allzu stark von ihrem Bemessungswert abweichen. Bei Feststellung einer Abweichung einer oder mehrerer Kondensatorspannungen von ihrem Bemessungswert sind unverzüglich geeignete Massnahmen zu ergreifen, um die Spannungen wieder auf ihren Bemessungswert zu bringen. Dies kann beispielsweise durch eine geeignete Wahl der Schaltzustände der Halbleiterschalter geschehen. Zur Feststellung einer eventuellen Abweichung einer oder mehrerer Kondensatorspannungen werden bei herkömmlichen MC oder SMC die einzelnen Kondensatorspannungen mit Hilfe von Spannungssensoren gemessen und die gemessenen Werte der Steuerung des Gleichspannungswechselrichters übergeben. Die Anzahl der benötigten Sensoren entspricht dabei der Anzahl im Gleichspannungswechselrichter verwendeter Kondensatoren. Bei einem SMC werden pro Stapel je ein Spannungssensor für den Zwischenkreis und je ein Spannungssensor pro Zelle und Phase benötigt. Ein SMC mit 2 Stapeln mit jeweils 3 Zellen pro Phase kommt somit auf insgesamt vierzehn Spannungssensoren.

### Kurze Darstellung der Erfindung

Die der vorliegenden Erfindung zugrundeliegende Aufgabe besteht darin, ein Verfahren zur Ermittlung der Kondensatorspannungen aller fliegenden Kondensatoren eines MC/SMC unter Verwendung einer reduzierten Anzahl Spannungssensoren zu schaffen.

Erfindungsgemäss wird die Aufgabe dadurch gelöst, dass die Spannungen der fliegenden Kondensatoren der Zellen der MC/SMC aus den gemessenen Phasenspannungen, den gemessenen Phasenströmen, den gemessenen Zwischenkreisspannungen und den jeweiligen Schaltzuständen der Halbleiterschalter berechnet werden. Erfindungsgemäss werden dadurch keine direkten Messungen der einzelnen Kondensatorspannungen mehr nötig.

Beim erfindungsgemässen Verfahren werden in einem ersten Schritt für alle fliegenden Kondensatoren die Kondensatorströme berechnet. Aus diesen Strömen können dann in einem zweiten Schritt durch Integration die zu bestimmenden Kondensatorspannungen errechnet werden. Dabei ist erfindungsgemäss vor der Integration ein Korrekturwert zu berücksichtigen, welcher wiederum aus den gemessenen Werten berechnet wird.

Für das obengenannte Beispiel eines SMC mit 2 Stapeln mit jeweils 3 Zellen pro Phase kann dank dem erfindungsgemässen Verfahren die Anzahl benötigter Spannungssensoren von vierzehn auf fünf reduziert werden. Es werden nur noch zwei Spannungssensoren für die Zwischenkreisspannung sowie je einer für die Phasenspannungen benötigt. Dazu kommen noch die Stromsensoren für die Phasenströme.

### Kurze Beschreibung der Zeichnungen

Nachfolgend wird das erfindungsgemässe Verfahren anhand von Figuren genauer erläutert. Hierbei zeigt
- Fig. 1: einen dreiphasigen Multicell Converter mit drei Zellen,
- Fig. 2: einen dreiphasigen Stacked Multicell Converter mit drei Zellen und zwei Stapeln, und
- Fig. 3: das Signalflussdiagramm einer Phase des Multizellen-Umrichters nach Fig. 1.

### Weg zur Ausführung der Erfindung

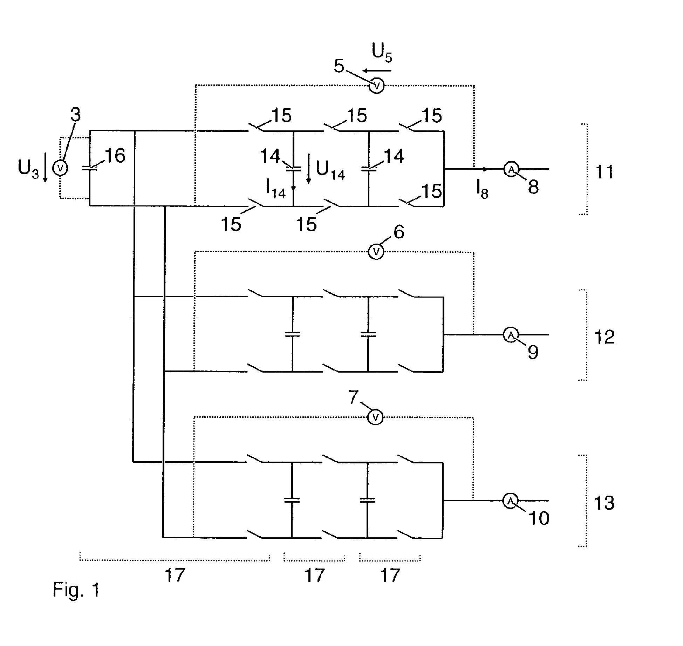

Fig. 1 zeigt einen Multicell Converter (MC) mit den drei Phasen 11, 12 und 13 auf der Wechselspannungsseite. Die Wechselspannung jeder Phase wird durch gezieltes Zu- und Abschalten von Kondensatoren als Gleichspannungsquellen erzeugt. Die drei Phasen teilen sich dabei den Zwischenkreiskondensator 16. Zusätzlich weist jede Phase zwei weitere Kondensatoren, die sogenannten fliegenden Kondensatoren 14 auf, so dass die Ausgangspannung jeder Phase aus insgesamt drei Gleichspannungsquellen gebildet werden kann. Um die Kondensatoren in der gewünschten Orientierung zuschalten zu können, weist jeder der Kondensatoren zugeordnete Halbleiterschalter 15 auf. Je ein Kondensator und die dazugehörigen Halbleiterschalter bilden eine sogenannte Zelle 17.

Für die erfindungsgemässe Berechnung der Spannungen über den fliegenden Kondensatoren 14 werden die in der Fig. 1 angedeuteten Strom- und Spannungssensoren benötigt. Mit dem Spannungssensor 3 wird die Spannung U₃ über dem Zwischenkreiskondensator 16 gemessen. Mit den Spannungssensoren 5, 6 und 7 werden die Phasenspannungen gemessen, zum Beispiel für die erste Phase U₅. Mit den Stromsensoren 8, 9 und 10 schliesslich, werden die Phasenströme gemessen, zum Beispiel für die erste Phase I₈. Die Spannungen der fliegenden Kondensatoren werden, wie weiter unten detailliert erläutert wird, aufgrund der gemessenen Grössen und der Schaltzustände der Halbleiterschalter 15 berechnet.

Fig. 2 zeigt einen Stacked Multicell Converter (SMC) mit wiederum drei Phasen 11, 12 und 13 auf der Wechselspannungsseite. Wie beim MC sind die Phasen aus mehreren Zellen aufgebaut, diese sind jedoch zusätzlich in zwei Stapel 18 unterteilt. Jeder Stapel umfasst einen eigenen Zwischenkreiskondensator 16. Die drei Phasen teilen sich wiederum die Zwischenkreiskondensatoren 16. Zusätzlich weist jede Phase pro Stapel zwei fliegende Kondensatoren 14 auf, so dass die Ausgangspannung jeder Phase aus insgesamt sechs Gleichspannungsquellen gebildet werden kann. Um die Kondensatoren in der gewünschten Orientierung zuschalten zu können, weist jeder der Kondensatoren zugeordnete Halbleiterschalter 15 auf.

Das nachfolgend beschriebene, erfindungsgemässe Verfahren kann unabhängig von der Anzahl Zellen und Stapel auf alle "Multicell Converter" und "Stacked Multicell Converter" angewendet werden.

Fig. 3 zeigt das Signalflussbild für die erste Phase des Multicell Converter nach Fig. 1. Anhand dieses Signalflussbilds wird nun im Detail auf das erfindungsgemässe Verfahren eingegangen. Auf der linken Seite sind die Eingangssignale des Signalflussdiagramms angeordnet. Die Ausgangssignale des Signalflussdiagramms, die Spannungen 23 der fliegenden Kondensatoren 14 sind auf der rechten Seite angeordnet.

Die Schaltzustände 19 aller Halbleiterschalter 15 der entsprechenden Phase werden in eine Tabelle 20 geführt. Die Schaltzustände 19 der Halbleiterschalter 15 beschreiben für jeden Augenblick, ob der entsprechende Schalter Strom führt (Schaltzustand ist 1) oder nicht (Schaltzustand ist 0). Aus den Schaltzuständen 19 wird mit Hilfe der Tabelle 20 für alle fliegenden Kondensatoren 14 und für den Zwischenkreiskondensator 16 bestimmt, mit welchem Vorzeichen 21 sie an der Ausgangsspannungsbildung beteiligt sind.

Die für die weitere Berechnung aus der Tabelle ermittelten Vorzeichenmultiplikatoren 21 sind
+1 (positiv) wenn der entsprechende Kondensator mit positivem Vorzeichen an der Ausgangsspannungsbildung beteiligt ist,
-1 (negativ) wenn der entsprechende Kondensator mit negativem Vorzeichen an der Ausgangsspannungsbildung beteiligt ist, und
0 (null), falls der entsprechende Kondensator nicht an der Ausgangsspannungsbildung beteiligt ist.

Aus den Schaltzuständen 19 der Halbleiterschalter 15 und den daraus ermittelten Vorzeichenmultiplikatoren werden durch Multiplikation mit dem negierten Phasenstrom I₈ (Signal 24) des Gleichspannungswechselrichters für alle fliegenden Kondensatoren die Kondensatorströme I₁₄ (Signale 29) berechnet.

Anschliessend werden aus diesen Strömen durch Integration die Kondensatorspannungen U₁₄ (Signale 23) errechnet. Dies ist eine offene Integration, was bedeutet, dass ohne zusätzliche Massnahmen die so errechneten Kondensatorspannungen aufgrund kleiner Fehler bei der Bestimmung der Kondensatorströme oder der Toleranzen der Kapazitäten der Kondensatoren immer weiter von den tatsächlichen Kondensatorspannungen abweichen können.

Um diese Abweichung zu verhindern, werden erfindungsgemäss zu den Kondensatorströmen I₁₄vor der Integration Korrekturterme 28 hinzuaddiert. Die Korrekturterme werden berechnet, indem zuerst die Vorzeichen 21 mit welcher die fliegenden Kondensatoren 14 an der Spannungsbildung beteiligt sind mit den durch die Integratoren 22 berechneten Kondensatorspannungen multipliziert werden und das Vorzeichen mit welchem der Zwischenkreiskondensator 16 an der Spannungsbildung beteiligt ist mit der durch den Spannungssensor 3 gemessenen Zwischenkreisspannung 25 multipliziert werden. Alle so ermittelten Spannungen werden nun zu einer berechneten Phasespannung addiert, welche um so besser mit der realen Phasespannung übereinstimmt, je genauer die Spannungen der fliegenden Kondensatoren 14 durch die Integratoren 22 wiedergegeben werden.

Von dieser berechneten Phasenspannung wird nun die effektiv gemessene Phasenspannung 26 subtrahiert. Daraus ergib sich der Phasenspannungsfehler 30. Der Phasenspannungsfehler ist wiederum umso kleiner, je genauer die Spannungen der fliegenden Kondensatoren 14 durch die Integratoren 22 wiedergegeben werden. Der Phasenspannungsfehler 30 kommt nur durch diejenigen Integratoren 22 zustande, welche eine Kondensatorspannung 23 eines gerade an der Spannungsbildung beteiligten Kondensators 14 berechnen. Deshalb wird der mit einem Korrekturfaktor 27 multiplizierte Phasenspannungsfehler 30 mit den Vorzeichen 21 mit welchen die fliegenden Kondensatoren an der Spannungsbildung beteiligt sind multipliziert. Der im Signalflussbild unten rechts angedeutete Korrekturfaktor 27 erlaubt es, zusätzlich die Stärke der hier beschriebenen Fehlerkorrektur zu verändern.

Durch die Einführung dieses Korrekturwertes wird sichergestellt, dass die errechneten Kondensatorspannungen, auch bei kleinen Fehlern bei der Bestimmung der Kondensatorströme oder der Toleranzen der Kapazitäten der Kondensatoren 14 , mit hoher Genauigkeit den tatsächlichen Kondensatorspannungen folgen.

Nach der Addition der Korrekturterme 28 werden aus den Kondensatorströmen durch Integratoren 22 die Kondensatorspannungen 23 berechnet.

Die erfindungsgemässe Berechnung der Spannungen über den fliegenden Kondensatoren kann analog auch bei Active Neutral-Point Clamped Multilevel Converters ("ANPCML") angewandt werden.

### Bezugszeichenliste

- 3, 4: Spannungssensoren für Zwischenkreisspannungen (bspw. U₃)
- 5, 6, 7: Spannungssensoren für Phasenspannungen (bspw. U₅)
- 8, 9, 10: Stromsensoren für Phasenströme (bspw. I₈)
- 11, 12, 13: Phasen
- 14: Fliegende Kondensatoren
- 15: Halbleiterschalter
- 16: Zwischenkreiskondensator
- 17: Zelle
- 18: Stapel
- 19: Schaltzustände der Halbleiterschalter
- 20: Tabelle
- 21_{(14), (16)}: Vorzeichenmultiplikator, Ausgangsspannungsbeteiligung der Fliegenden Kondensatoren (14) und Zwischenkreiskondensatoren (16)
- 22: Integratoren
- 23: Kondensatorspannungen
- 24: Phasenstrom (bspw. I₈)
- 25: Zwischenkreisspannungen (bspw. U₃)
- 26: Phasenspannung (bspw. U₅)
- 27: Korrekturfaktor
- 28: Korrekturterme
- 29: Kondensatorströme
- 30: Phasenspannungsfehler

## Patentansprüche

1. Verfahren zum Bestimmen der Spannungen der fliegenden Kondensatoren (14) eines Multicell Converters ("MC") oder eines Stacked Multicell Converters ("SMC") oder eines Active Neutral-Point Clamped Multilevel Converters ("ANPCML"), **dadurch gekennzeichnet, dass** die Spannungen aus den Phasenspannungen (26, U₅), den Phasenströmen (29, I₁₄), den Zwischenkreisspannungen (25, U₃, U₄), sowie den Schaltzuständen der Halbleiterschalter (15) des Converters berechnet werden.

2. Verfahren nach Anspruch 1, **gekennzeichnet durch** folgende Verfahrenschritte:
- aus den Schaltzuständen der Halbleiterschalter (15) werden Vorzeichenmultiplikatoren (21) der fliegenden Kondensatoren (14) und der Zwischenkreiskondensatoren (16) bestimmt, wobei der Vorzeichenmultiplikator eines Kondensators, der jeweiligen Beteiligung dieses Kondensators an der Ausgangsspannungsbildung entsprechend, "positiv", "negativ" oder "null" ist,
- die Ströme (29, I₁₄) **durch** die fliegenden Kondensatoren (14) werden **durch** Multiplizieren der Vorzeichenmultiplikatoren (21) der Ausgangsspannungsbeteiligung der fliegenden Kondensatoren (14) mit dem mittels einem Stromsensor (8) gemessenen Phasenstrom (24, I₈) berechnet, und
- aus den Strömen **durch** die fliegenden Kondensatoren (29, I₁₄) werden **durch** Integration die Spannungen (23, U₁₄) der fliegenden Kondensatoren (14) berechnet, wobei
- zu den Strömen **durch** die fliegenden Kondensatoren (29, l₁₄) vor der Integration Korrekturterme (28) addiert werden,
- wobei die Korrekturterme (28) jeweils aus dem Produkt der Differenz einer gemessenen Phasenspannung (26, U₅) und einer berechneten Phasenspannung und den Vorzeichenmultiplikatoren (21) der fliegenden Kondensatoren (14) berechnet werden,
- wobei die berechnete Phasenspannung (26, U₅) aus der Summe aller mit den jeweiligen Vorzeichenmultiplikatoren (21) der fliegenden Kondensatoren (14) multiplizierten aufintegrierten Phasenströmen und der mit den jeweiligen Vorzeichenmultiplikatoren (21) der Zwischenkreiskondensatoren (16) multiplizierten gemessenen Zwischenkreisspannung (25, U₃) bestimmt wird.
